# EUROPEAN PATENT SPECIFICATION

(11) **EP 2 431 409 B1**
(45) Date of publication and mention of the grant of the patent: **15.01.2014**
(21) Application number: 10176771.3
(22) Date of filing: 15.09.2010
(51) Int. Cl.: C08J 7/04, B65D 23/08, B65D 1/02, B29C 49/02

(54) **Plastic containers with Oxygen barrier**
Kunststoffbehälter mit Sauerstoffsperre
Conteneurs en plastique avec barrière contre l'oxygène

(43) Date of publication of application: 21.03.2012
(73) Proprietor: Kuraray Europe GmbH, 65795 Hattersheim (DE); Container Corporation of Canada, Richmond Hill, ON L4B 1H1 (CA)
(72) Inventor: Gottlieb, Norman James, Thornhill Ontario L3T 3A7 (CA); Fuss, Robert W., Dr. c/o Kuraray Europe GmbH, 65835 Liederbach (DE)
(74) Representative: Kisters, Michael Marcus

(56) References cited:
- WO-A1-03/037969
- DE-A1- 10 207 592
- DE-A1- 10 319 235
- GB-A- 879 595
- GB-A- 2 337 470

## Description

This invention relates to plastic containers having a scratch and moisture resistant barrier coating against oxygen or carbon dioxide and in particular to a process for manufacturing of such containers.

### Background of the Invention

Plastic containers for food and beverages are long known and are mostly produced from polyethyleneterephthalate (PET), polypropylene (PP) or polyethylene (PE) in stretch blow molding processes.

It is also known to apply a barrier coating on such containers in order to reduce the permeation of gases, especially oxygen or carbon dioxide into or out of the container, thereby improving the shelf live of the packed goods.

In this respect US 5419967 discloses the use of a blend of polyvinyl alcohol (PVA) with polymethacrylate as barrier material for PET substrates. The barrier material is coextruded on a film or sheet of the substrate to form a multi-layer composite material.

A similar process is known from EP 0023701 (US 5258230) where a film consisting of plasticized PVA is coated with polyvinyl acetal to produce water insoluble coating having a high penetration resistance for oxygen. The coated PVA-film is intended as packing material for food, cosmetic articles or medical devices. The plasticizer of the PVA layer will most likely migrate into the polyvinyl acetal layer, which results in a mechanically inferior top coating.

Furthermore, it is known from DE 10153210 and DE 10207592 A1 to use polyvinyl alcohol as gas barrier on PET bottles with an additional top coat comprising polyvinyl butyral to improve the water resistance of the barrier coating. Such multilayer coatings show a good barrier performance against oxygen and carbon dioxide, scratch resistance and are recyclable after mechanically destroying the top layer due the to the water solubility of the barrier coating.

Most plastic bottles for example used for soft drinks are produced by injection stretch blow molding from so called preforms. In such blowing processes, the preform is expanded to more than 10 times of its original volume resulting in a significant thinning of any coating layered on the surface of the preform. In order to prevent the degradation or cracks of the barrier coating during the stretch blow process, the prior art suggests several film building polymers for the top coating.

In this respect, GB 2337470 A1 discloses a method for coating a PET preform for bottles with a barrier coating based on PVA and protection of the barrier coated preform by applying a second polymeric material. As second polymeric material, polyester like PET and polycarbonates are suggested. This publication describes furthermore chemical or physical pre-treatments of the surface of the substrate prior to application of the barrier coating. GB 2337470 discloses for chemical pre-treatment the reaction of a heated preform with an adhesive such as methoxy-methyl-methylolmelamin (Cymel) or a polyester-based adhesive. The adhesion of the barrier coating may further be enhanced by physical pre-treatment such as flame or corona discharge treatment.

The protective coating applied on the barrier coating disclosed in GB 2337470 is specially tailored to survive the blow molding process of the coated preforms. Since polyvinyl alcohol is a rather hydrophilic polymer and PET rather hygroscopic, the top coating as suggested by this publication is mechanically and chemically unstable and will delaminate under humid conditions. Once the top coating is permeable for water, the water soluble barrier coating from polyvinyl alcohol will dissolve, thus removing the overall barrier feature. GB 2337470 suggest as solvent for PVA a water/isopropanol/methanoic acid and for the PET top coating ethyl acetate. Both solvent systems are not acceptable due to environmental restrictions. Therefore, the process as disclosed by GB 233740 is not applicable for industrial-size coating of bottles.

A similar technique is disclosed by WO 2004/089624, where containers for food or manufactured goods from PET or polyolefins are first coated with a blend of at least two polymers including PVA, polyamines, polyvinylimines, polyacrylic acids etc. and subsequently with a protective coating of polyurethanes, PVC or polyacrylates. Optionally and prior to the barrier coating, the substrate may be pre-treated by plasma, flames, chlorine, fluorine or chemical etching. Top coating polyvinyl alcohol as quite polar polymer with the polymers as proposed by this publication will result in mechanically and chemically unstable layers.

### Object of the invention

Object of the present invention is therefore to provide a coating for polymeric substrates which reduces the gas permeability of the substrate, having good adherence to the substrate and is mechanically flexible to allow a subsequent shaping process of the substrate without resulting in defects of the coating.

The present invention relates to a process for reducing the gas permeability of a plastic material by applying a barrier coating on the plastic material comprising the steps a) pre-treatment of at least a part of the plastic material by oxyfluorination; b) applying at least one coating layer of polyvinyl alcohol on the pre-treated surface and c) applying at least one top coating layer of polyvinyl acetal on the polyvinyl alcohol layer.

Polyvinyl alcohol reduces the gas permeability (especially O₂ and CO₂) of the substrate significantly, thereby improving the shelf-life of packed foods, soft drinks or beer. The use of coating consisting only of PVA is limited because of its moisture sensitivity. Polyvinyl acetals are especial suitable as top coating for PVA layer since both polymers have a similar polymeric backbone and are compatible in a broad range of mixtures.

The activation of the plastic material ensures that the subsequent added layers of polyvinyl acetal and polyvinyl alcohol adhere to the substrate, thereby obtaining a mechanical stable composite which can be stretch-blown without cracks or delamination.

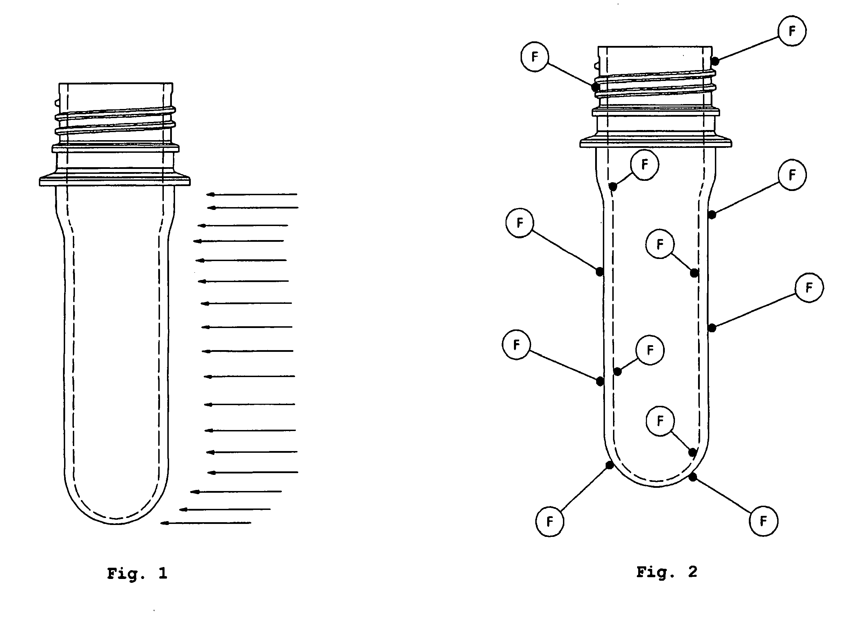

The plastic material is pre-treated or activated by oxyfluorination preferably of at least a part of the surface of the plastic material. Fig. 1 shows a typical preform for a bottle treaded with corona, electronic beam or plasma.

Preferably the pre-treatment or activation of at least a part of the surface of the plastic material results in an increase of the surface energy of this part of the plastic material of at least 25%, more preferably of at least 50%, based on the surface energy before treatment.

Untreated PET shows a surface energy of 30-45 mJ/m². Accordingly, if the plastic material consists of PET, surface energy after pre-treatment should be at least 50 mJ/m², preferable at least 55 mJ/m² and especially at least 60 mJ/m², the upper range being 150 mJ/m².

Untreated PP has a surface energy of 25-35 mJ/m². Accordingly, if the plastic material consists of PP, surface energy after pre-treatment should be at least 45 mJ/m², preferable at least 50 mJ/m² and especially at least 55 mJ/m², the upper range being 150 mJ/m². The surface energy is measured according the manual of Accu Dyne Test™ Marker Pens.

Oxyfluorination is described in detail for example in W02004/089624 or US 5,900,321. The pre-treatment by oxyfluorination according to this invention may be conducted by exposing at least a part of the surface of the plastic material to a fluorine-containing gas mixture containing 0.01% to 5 % by volume fluorine and optionally inert gases like nitrogen or air, or an additional reactive species such as chlorine or oxygen. Oxyfluorination for this invention may take place at a pressure of 10 - 10000 kPa, preferably 100 - 5000 kPa at a temperature of 10 - 90°C with a time of exposure of 1 to 60 minutes. Fig. 2 shows a pre-treated preform of a bottle, for example after Oxyfluorination. "f" in Fig. 2 stands for the pre-treated / oxyfluorinated sites on the preform. The preform may be pre-treaded on the inside (i.e. the side of the container which will be in contact with the packed goods) and/or on the outside. Preferable, the preform is pre-treaded only on its outside.

After pre-treatment, the plastic material is coated with polyvinyl alcohol as barrier coating. Preferably the polyvinyl alcohol has a degree of saponification/hydrolisation of at least 90%, preferable of at least 98%. The PVA layer does not contain a plasticizer except some traces of moisture originating from the coating process.

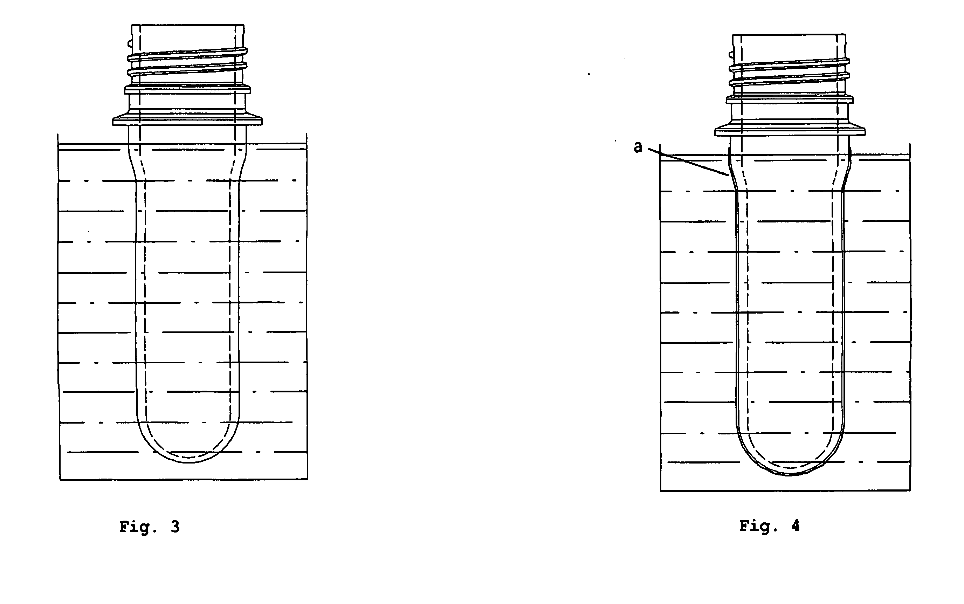

The coating layer may have a thickness of 0,01 to 5 pm. Preferable, the polyvinyl alcohol is applied as aqueous solution, for example by dip-coating, flowing or spraying. The concentration of the coating solution is preferable between 5 and 25% by Weight. Fig. 3 shows the coating of an activated preform by dipping into an aqueous solution of polyvinyl alcohol.

Superfluous coating material may be removed by spinning of the plastic material. The coating is dried at room temperature for 4-8 hours (overnight) or at elevated temperature in an oven with temperatures between 30 and 60 °C for 0,5 to 2 hours. With the aid of appropriate machinery like conveyors with heaters, fast drying/curing is obtained in 15-30 sec.

The barrier-coated plastic material is dried to remove essential all water at ambient temperature of 10 to 90°C, preferable 10 - 50 °C optionally at reduced pressure and then subjected to the protective top-coating.

For the protective coating, polyvinyl acetal as the reaction product of polyvinyl alcohol with one or more aldehydes is used. Suitable polyvinyl acetals are selected from the group consisting of polyvinyl butyral, polyvinyl acetyl-co-butyral and crosslinked polyvinyl butyral. The acetalisation degree of the polyvinyl acetals should be between 70 and 90 mol%, the polyvinyl alcohol content between 8 and 30 mol%.

The polyvinyl acetal is applied on the polyvinyl alcohol layer as solution in an organic solvent, for example as solution in methyl ethyl ketone (MEK), methanol, acetone or ethanol for example by dip-coating or spraying. The polyvinyl acetal may have a thickness of 0,01 to 5 µm. Fig. 4 shows the coating of a preform with a barrier coating of polyvinyl alcohol (a) by dipping into an solution of polyvinyl acetal.

The concentration of the coating solution is preferable between 5 and 25% by Weight.

Superfluous coating material may be removed by spinning of the plastic material. The coating is dried at room temperature for 4-8 hours (overnight) or at elevated temperature in an oven with temperatures between 30 and 60 °C for 0,5 to 2 hours. With the aid of appropriate machinery like conveyors with heaters, fast drying/curing is obtained in 15-30 sec.

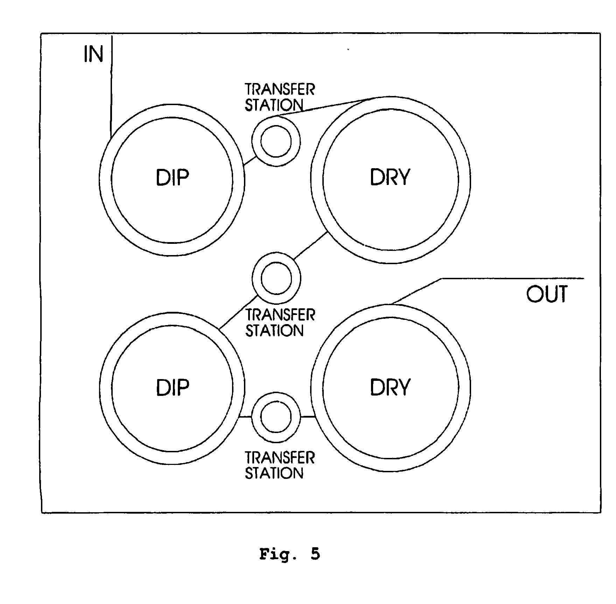

Fig. 5 shows a flow sequence for a preform coating line, where the two coating steps are conducted by dipping the pre-traeted perform into solutions of polyvinyl alcohol and polyvinyl acetal with subsequent drying stations. The preforms are transferred between the coating and drying station via transfer stations with appropriate machinery.

It is possible to incorporate dyes or pigments in the barrier coating and/or the protective top coating. Suitable pigments are for example SiO₂, Al₂O₃, or TiO₂, as dyes "Rhenol"-type dyes from Clariant can be used. The concentration of dyes or pigments in each layer can range from 0.01 to 5 Wght%, based on the polymer.

Subsequent to coating and drying according to the to the steps a, b and c), the plastic material may be final shaped into a container by a blow-forming process a blowing process like stretch blowing or injection stretch blow moulding.

The plastic material to be coated with the process of the invention may comprise or consist of polymers selected from the group PET, PP, PE (polyethylene) and COC (cyclic olefin copolymer.

The plastic material may have any two or three dimensional shape like film or a container or a part of a container. The coating may also be applied on a first shaped body (preform) which is then formed into the container. "Preform" as used in this application is not limited to any shaped body, especially not to preforms of a bottle and may characterize any first shaped body which is used to produce the final container by another shaping process. Fig. 1 shows a typical preform for a bottle.

Yet another object of the invention is a process to manufacture a container by subjecting a preform of the container, to a process comprising the already described coating steps a, b and c) and subsequently shaping the preform into the final shape of the container. Preferable, shaping the preform is performed by a blowing process like stretch blowing or injection stretch blow moulding.

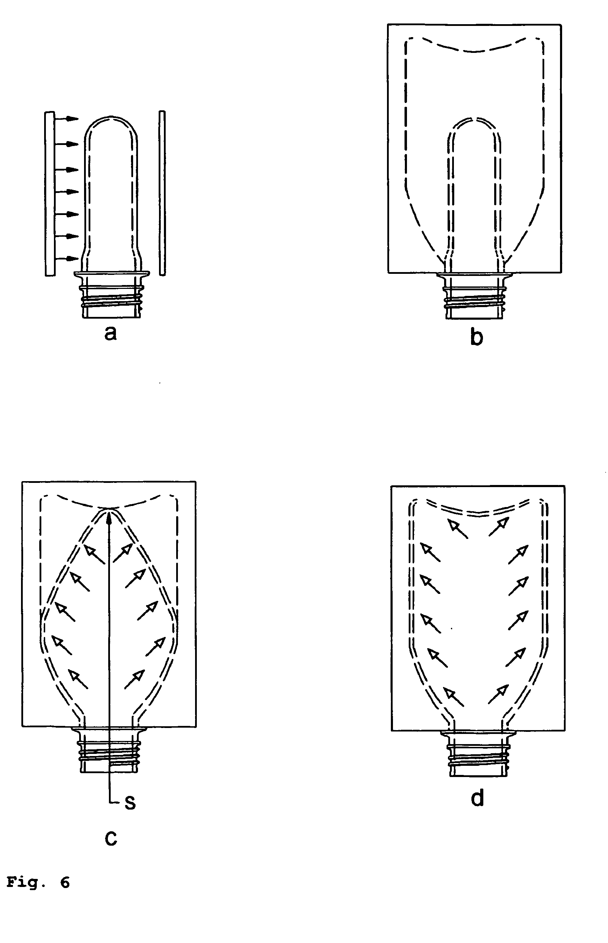

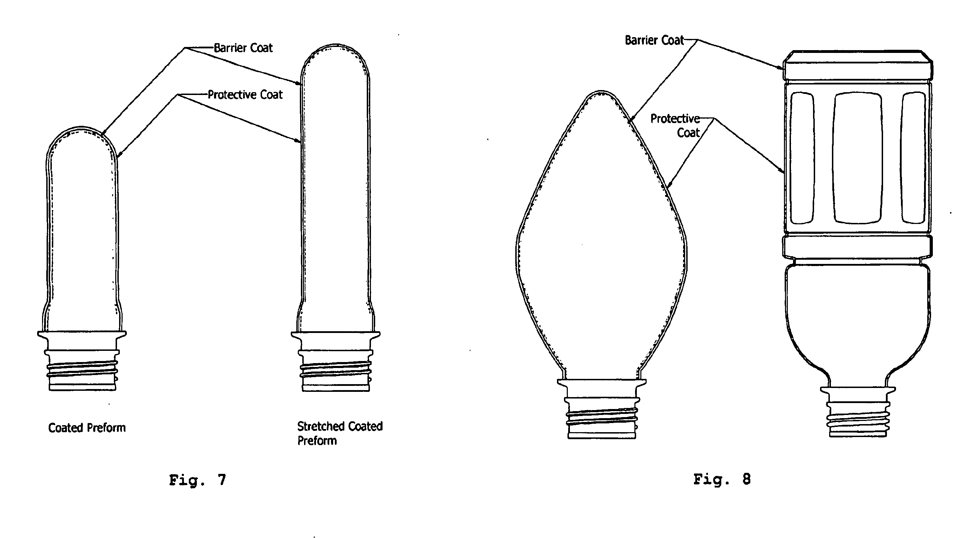

A stretch blow process for the invention is shown by way of example in Fig. 6. In step a, the preform is first heated and then transferred into the mould (b). After stretching by force s and pre-blowing (step c), the bottle is finally blown in step d. Figure 7 shows a coated preform according to the invention (a) which can be stretched without damaging the coating (b). The stretched preform of fig. 7 can be converted into a stretched pre-blown coated preform as shown in Fig 8a, which is finally inflated (blown) to a coated bottle (Fig. 8 b)

The coating according to the invention may be applied to the outside or the inside or both sides of the container.

The containers coated by the process of the invention may be used for food, or beverages, drugs, spices, coffee, tea or chemicals. The container may have a shape selected from the group consisting of capsules, blister packages, sachets, envelopes, jerry cans, bottles and jars.

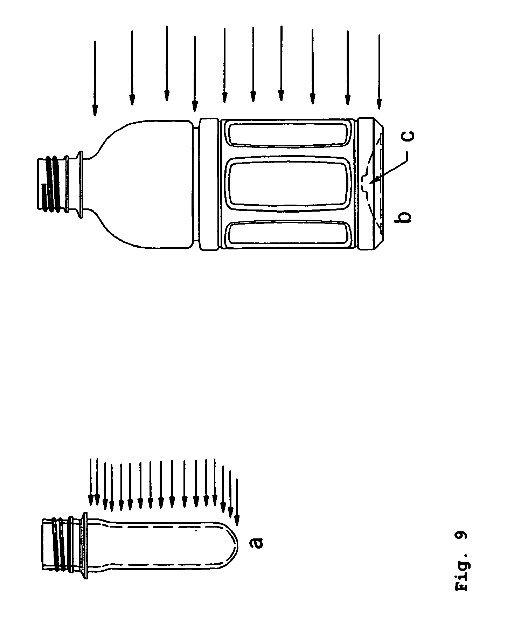

The advantage of the process according to the invention is that the coating is flexible enough to survive a stretch blow process, yet mechanically and chemically stable enough to protect packed goods. Fig. 9 shows a comparison of preform and bottle plasma treatment and coating. Smooth non-obstracted preform shapes allow good access for surface treatment and uniform coating (Fig. 9a). Side bottle grooves, curved-in bottom and side panels are difficult to reach areas for plasma surface treatment, easy to melt and result in coating uneven distribution with accumulation in the grooves and panel corners (Fig. 9b).

### EXAMPLES

### Coating of Polypropylene Containers

A vessel of pressurized treatment gas was first prepared by pulling a strong vacuum (< 1 torr) on a clean, dry steel pressure cylinder that had been passivated for fluorine service. To this was added 20% (by volume) of F₂ in nitrogen until a gauge pressure of 1061 kPa (154 psi) was achieved. Then dry, oil-free compressed air was added until the vessel achieved a gauge pressure of 3,4 MPa (500 psi). This cylinder was laid horizontally on a roller device and rolled for 48 hours to mix the gases to homogeneity.

Fluorooxidation was performed batch-wise in a steel vessel with an internal volume of 56 1 (2 ft³). Polypropylene containers were placed on a wire rack in the treatment vessel at ambient temperature, and the vessel door was closed and sealed. Using a vacuum pump, air was evacuated from the treatment vessel until a pressure of 5 torr was achieved. The pressurized treatment gas described above was admitted until an absolute pressure of 760 torr was achieved.

The polypropylene containers were left in the reactor with the fluorine gas mixture for 20 minutes. The gases in the reactor were then removed by a vacuum pump that exhausted through a caustic scrubber. The evacuated reactor was filled with dry, oil-free air to 765 torr and then evacuated to 5 torr. This purging step was performed ten times. The reactor was again filled with dry, clean air, the door was opened, and the treated polypropylene containers were removed.

The surface energy of the polypropylene containers before fluorooxidizing was 30 - 34 mJ/m², after pre-treatment the surface energy was found to be 52 - 56 mJ/m² (dynes/cm). Surface energy was measured with Accu Dyne Test™ Marker Pens.

### Coating of Polyethylene terephthalate (PET) Containers

A vessel of pressurized treatment gas was first prepared by pulling a strong vacuum (< 1 torr) on a clean, dry steel pressure cylinder that had been passivated for fluorine service. To this was added 20% (by volume) of F₂ in nitrogen until a gauge pressure of 703 kPa (103 psi) was achieved. Then dry, oil-free compressed air was added until the vessel achieved a gauge pressure of 3,4 MPa (500 psi). This cylinder was then laid horizontally on a roller device and rolled for 48 hours to mix the gases to homogeneity. Fluorooxidation was performed batch-wise in a steel vessel with an internal volume of 56 1 (2 ft³).

PET containers were placed on a wire rack in the treatment vessel at ambient temperature. The vessel door was closed and sealed. Using a vacuum pump, air is evacuated from the treatment vessel until a pressure of 5 torr is achieved. The pressurized treatment gas described above was admitted into the reaction vessel until an absolute pressure of 765 torr was achieved.

The PET containers were left in the reactor with the fluorine gas mixture for 15 minutes.

The gases in the reactor were removed by a vacuum pump that exhausted through a caustic scrubber. The evacuated reactor was filled with dry, oil-free air to 760 torr and then evacuated to 5 torr. This purging step was performed ten times. The reactor was again filled with dry, clean air, the door was opened, and the treated PET containers were removed.

The surface energy of the PET containers before fluorooxidizing was 36 - 40 mJ/m², after pre-treatment the surface energy was found to be 56 - 60 mJ/m² (dynes/cm). Surface energy was measured with Accu Dyne Test™ Marker Pens.

### Coating

Preforms for 500 ml bottles from PP and PET were pre-treated as described.

A 10 Wght% aqueous solution of MOWIOL 28-99 (PVA with a degree of saponification 99%) from Kuraray Europe GmbH was prepared and coated by dipping the pre-treated preforms into the solution. Excess coating liquid was removed by spinning and the coated preforms were left to dry overnight at room temperature.

Then, a 10 Wght% ethanolic solution of MOWITAL SB 30HH as polyvinyl butyral (PVB) with a PVOH content of 18-21 mol% and a polyvinyl acetate content of 1-4 mol% (Kuraray Europe GmbH) was prepared and coated by dipping the preforms already coated with PVA as described into the solution. Excess coating liquid was removed by spinning and the coated preforms were left to dry overnight at room temperature.

The thus coated preforms were blown on a usual Stretch Blow Moulding machine used to blow uncoated preforms from the respective substrate materials with substantial the same parameters for the shaping process as for PP or PET.

The following table shows the oxygen permeability results of coated bottles according to the invention as compared to uncoated bottles, as measured with a MoCon test equipment.

| Material | Coated | Uncoated |
|---|---|---|
| PP (360ml bottle) | 0,0025 cc/pkg/day | 0,1 cc/pkg/day |
| PET (250ml bottle) | 0,00078 cc/pkg/day | 0,022 cc/pkg/day |

"cc/pkg/day" stands for loss of cubic centimetre gas per day per package As can be seen form the table, the oxygen permeability of coated PP bottles can be reduced to 5,5% and for coated PET bottles to 8,6% of the respective value for uncoated bottles.

The bottles and the coating were mechanical stable against usual wear (for example fingernail scratch) and humidity (for example remove a water-filled bottle from the refrigerator). If the preform was not pretreated but coated as described, oxygen permeability results were lower due to pinholes and/or cracks occurring in the coating after blowing. Furthermore, the coating can be removed by fingernail scratching and is then sensitive to moisture.

## Claims

1. Process for reducing the gas permeability of a plastic material by applying a barrier coating on the plastic material comprising the steps a) pre-treatment of at least a part of the plastic material by oxyfluorination; b) applying at least one coating layer of polyvinyl alcohol on the pre-treated surface and c) applying at least one top coating layer of polyvinyl acetal on the polyvinyl alcohol layer.

2. Process according to claim 1 **characterized in that** the surface energy of the plastic material is increased after pre-treatment by at least 10%.

3. Process according to claim 1 or 2, **characterized in that** the polyvinyl alcohol is applied as aqueous solution.

4. Process according to any of the claims 1 to 3, **characterized in that** the coating layer of polyvinyl alcohol is applied as aqueous solution and dried at 10 - 90 °C.

5. Process according to any of the claims 1 to 4, **characterized in that** the polyvinyl alcohol has a degree of saponification of at least 90%.

6. Process according to any of the claims 1 to 5, **characterized in that** the polyvinyl acetal is selected from the group consisting of polyvinyl butyral, polyvinyl acetyl-co-butyral and crosslinked polyvinyl butyral.

7. Process according to any of the claims 1 to 6, **characterized in that** the polyvinyl acetal is applied on the polyvinyl alcohol layer as solution in an organic solvent.

8. Process according to any of the claims 1 to 7, **characterized in that** subsequent to the steps a, b and c) the coated plastic material is shaped in a blow-forming process.

9. Process according to any of the claims 1 to 8, **characterized in that** the plastic material comprises PET, PP, PE or COC.

10. Process to manufacture a container or a part thereof by subjecting a preform of said container to a process as claimed in any of the claims 1 to 9 and subsequently shaping the preform into the final shape of the container.

11. Process according to claim 10, **characterized in that** the shaping of the preform is performed by stretch blowing or injection stretch blow moulding.

12. Process according to claim 10 or 11, **characterized in that** the coating is applied to the outside of the container.

13. Process according to claim 10 or 11, **characterized in that** the coating is applied to the inside of the container.

## Patentansprüche

1. Verfahren zur Reduzierung der Gasdurchlässigkeit eines Kunststoffmaterials durch Auftragen einer Barrierebeschichtung auf das Kunststoffmaterial, umfassend die Schritte a) Vorbehandlung mindestens eines Teils des Kunststoffmaterials durch Oxyfluorierung; b) Auftragen mindestens einer Beschichtungsschicht aus Polyvinylalkohol auf die vorbehandelte Oberfläche und c) Auftragen mindestens einer Deckbeschichtungsschicht aus Polyvinylacetal auf die Polyvinylalkoholschicht.

2. Verfahren nach Anspruch 1, **dadurch gekennzeichnet, dass** die Oberflächenenergie des Kunststoffmaterials nach der Vorbehandlung um mindestens 10 % erhöht ist.

3. Verfahren nach Anspruch 1 oder 2, **dadurch gekennzeichnet, dass** der Polyvinylalkohol als wässrige Lösung aufgebracht wird.

4. Verfahren nach einem der Ansprüche 1 bis 3, **dadurch gekennzeichnet, dass** die Beschichtungsschicht aus Polyvinylalkohol als wässrige Lösung aufgebracht und bei 10 - 90 °C getrocknet wird.

5. Verfahren nach einem der Ansprüche 1 bis 4, **dadurch gekennzeichnet, dass** der Polyvinylalkohol einen Verseifungsgrad von mindestens 90 % aufweist.

6. Verfahren nach einem der Ansprüche 1 bis 5, **dadurch gekennzeichnet, dass** das Polyvinylacetal aus der Gruppe ausgewählt ist bestehend aus Polyvinylbutyral, Polyvinylacetyl-co-butyral und vernetztem Polyvinylbutyral.

7. Verfahren nach einem der Ansprüche 1 bis 6, **dadurch gekennzeichnet, dass** das Polyvinylacetal auf die Polyvinylalkoholschicht als Lösung in einem organischen Lösungsmittel aufgebracht wird.

8. Verfahren nach einem der Ansprüche 1 bis 7, **dadurch gekennzeichnet, dass** auf die Schritte a, b und c) hin das beschichtete Kunststoffmaterial durch ein Blasformverfahren gestaltet wird.

9. Verfahren nach einem der Ansprüche 1 bis 8, **dadurch gekennzeichnet**, das Kunststoffmaterial PET, PP, PE oder COC umfasst.

10. Verfahren zur Herstellung eines Behälters oder eines Teils davon durch Unterwerfen eines Vorformlings des Behälters einem Verfahren nach einem der Ansprüche 1 bis 9 und daraufhin Gestalten des Vorformlings zu der Endgestalt des Behälter.

11. Verfahren nach Anspruch 10, **dadurch gekennzeichnet, dass** das Gestalten des Vorformlings durch Streckblasen oder Spritzgießstreckblasen durchgeführt wird.

12. Verfahren nach Anspruch 10 oder 11, **dadurch gekennzeichnet, dass** die Beschichtung auf die Außenseite des Behälters aufgebracht wird.

13. Verfahren nach Anspruch 10 oder 11, **dadurch gekennzeichnet, dass** die Beschichtung auf die Innenseite des Behälters aufgebracht wird.

## Revendications

1. Procédé de réduction de la perméabilité gazeuse d'une matière plastique par application d'un revêtement de barrière sur la matière plastique comprenant les étapes consistant à a) prétraiter au moins une partie de la matière plastique par oxyfluoration ; b) appliquer au moins une couche de revêtement d'alcool polyvinylique sur la surface prétraitée et c) appliquer au moins une couche de revêtement de finition d'acétal polyvinylique sur la couche d'alcool polyvinylique.

2. Procédé selon la revendication 1, **caractérisé en ce que** l'énergie de surface de la matière plastique est augmentée après le prétraitement par au moins 10 %.

3. Procédé selon la revendication 1 ou 2, **caractérisé en ce que** l'alcool polyvinylique est appliqué sous forme de solution aqueuse.

4. Procédé selon l'une quelconque des revendications 1 à 3, **caractérisé en ce que** la couche de revêtement d'alcool polyvinylique est appliquée sous forme de solution aqueuse et séchée à 10 à 90 °C.

5. Procédé selon l'une quelconque des revendications 1 à 4, **caractérisé en ce que** l'alcool polyvinylique a un degré de saponification d'au moins 90 %.

6. Procédé selon l'une quelconque des revendications 1 à 5, **caractérisé en ce que** l'acétal polyvinylique est sélectionné dans le groupe constitué par le butyral polyvinylique, l'acétyl-co-butyral polyvinylique et le butyral polyvinylique réticulé.

7. Procédé selon l'une quelconque des revendications 1 à 6, **caractérisé en ce que** l'acétal polyvinylique est appliqué sur la couche d'alcool polyvinylique sous forme de solution dans un solvant organique.

8. Procédé selon l'une quelconque des revendications 1 à 7, **caractérisé en ce que** suite aux étapes a, b et c), la matière plastique enduite est façonnée dans un procédé de formation par soufflage.

9. Procédé selon l'une quelconque des revendications 1 à 8, **caractérisé en ce que** la matière plastique comprend du PET, PP, PE ou COC.

10. Procédé de fabrication d'un contenant ou d'une partie de celui-ci par soumission d'une préforme dudit contenant à un procédé selon l'une quelconque des revendications 1 à 9 et ensuite façonnage de la préforme en la forme finale du contenant.

11. Procédé selon la revendication 10, **caractérisé en ce que** le façonnage de la préforme est réalisé par un soufflage par étirage ou une injection-moulage par biorientation.

12. Procédé selon la revendication 10 ou 11, **caractérisé en ce que** le revêtement est appliqué à l'extérieur du contenant.

13. Procédé selon la revendication 10 ou 11, **caractérisé en ce que** le revêtement est appliqué à l'intérieur du contenant.
